(19) **Europäisches Patentamt / European Patent Office / Office européen des brevets**

(11) **EP 4 601 026 A2**

(12) # EUROPEAN PATENT APPLICATION

(43) Date of publication:
**13.08.2025 Bulletin 2025/33**

(21) Application number: **24215289.0**

(22) Date of filing: **26.11.2024**

(51) International Patent Classification (IPC):
$H01M\ 4/133^{(2010.01)}$    $H01M\ 4/134^{(2010.01)}$
$H01M\ 4/36^{(2006.01)}$    $H01M\ 4/38^{(2006.01)}$
$H01M\ 4/583^{(2010.01)}$    $H01M\ 4/587^{(2010.01)}$

(52) Cooperative Patent Classification (CPC):
**H01M 4/587; H01M 4/133; H01M 4/134;
H01M 4/362; H01M 4/366; H01M 4/386;
H01M 4/583;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2024 KR 20240006888**

(71) Applicant: **Samsung SDI Co., Ltd.
Yongin-si, Gyeonggi-do 17084 (KR)**

(72) Inventors:
• **Lee, Junkyu**
  **17084 Gyeonggi-do (KR)**

• **Chae, Wonhyung**
  **17084 Gyeonggi-do (KR)**
• **Kim, Keewook**
  **17084 Gyeonggi-do (KR)**
• **Im, Eunhee**
  **17084 Gyeonggi-do (KR)**
• **Choi, Mingu**
  **17084 Gyeonggi-do (KR)**
• **Cho, Kwanghwan**
  **17084 Gyeonggi-do (KR)**

(74) Representative: **Michalski Hüttermann & Partner
Patentanwälte mbB
Kaistraße 16A
40221 Düsseldorf (DE)**

(54) **NEGATIVE ELECTRODE FOR RECHARGEABLE LITHIUM BATTERY AND RECHARGEABLE LITHIUM BATTERY INCLUDING SAME**

(57)    Disclosed are a negative electrode for a rechargeable lithium battery and a rechargeable lithium battery. The negative electrode includes a current collector; and a negative active material layer, wherein the negative active material layer includes a first active material layer on the current collector and including a first crystalline carbon, a Si-C composite, and a first binder; and a second active material layer on the first active material layer and including a second crystalline carbon, a Si-C composite, and a second binder, a particle diameter of the first crystalline carbon is smaller than a particle diameter of the second crystalline carbon, and based on the total negative active material layer, an amount of the first binder is larger than an amount of the second binder, an amount of the Si is about 3 wt% or more based on 100 wt% of the negative active material layer.

FIG. 1

**Description**

**BACKGROUND**

**1. Field**

Embodiments of the present disclosure relate to a negative electrode for a rechargeable lithium battery and a rechargeable lithium battery including the same.

**2. Description of the Related Art**

Recently, the rapid advancement of electronic devices such as mobile phones, laptop computers, and electric vehicles using batteries has resulted in surprising increases in interest in rechargeable batteries having relatively high energy density and high capacity. Research and development for improving performance of rechargeable lithium batteries is actively being conducted.

Rechargeable lithium batteries may include a positive electrode and a negative electrode including an active material capable of intercalating and deintercalating lithium ions, and an electrolyte, and may generate electrical energy by the oxidation and reduction reaction if lithium ions are intercalated/deintercalated at the positive and negative electrodes.

**SUMMARY**

One or more embodiments of the present disclosure provide a negative electrode for a rechargeable lithium battery exhibiting excellent adherence and low ionic resistance.

Embodiments provide a rechargeable lithium battery including the negative electrode.

Some embodiments provide a negative electrode for a rechargeable lithium battery including a current collector; and a negative active material layer, wherein the negative active material layer includes a first active material layer on the current collector and including a first crystalline carbon, a Si-C composite, and a first binder; and a second active material layer on the first active material layer and including a second crystalline carbon, a Si-C composite, and a second binder, a particle diameter of the first crystalline carbon is smaller than that of the second crystalline carbon, an amount of the first binder is greater than that of the second binder in the entire negative active material layer, an amount of Si is about 3 wt% or more based on 100 wt% of the negative active material layer, and a DD (Degree of Divergence) value defined by Equation 1 is about 30 or more.

$$[\text{Equation 1}]$$

$$DD \text{ (Degree of Divergence)} = (I_a/I_{total}) * 100$$

wherein,

$I_a$ is a sum of peak intensities at non-planar angles measured by X-ray powder diffraction (XRD) using a CuK$\alpha$ ray, and, $I_{total}$ is a sum of peak intensities at all angles measured by XRD using a CuK$\alpha$ ray.

Embodiments provide a rechargeable lithium battery including the negative electrode; a positive electrode, and a non-aqueous electrolyte.

A negative electrode for a rechargeable lithium battery may exhibit improved adhesion and low ionic resistance.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIG. 1 is a schematic view showing orientations of negative active material according to an embodiment.
FIG. 2 is a cross-sectional view schematically showing a negative electrode for a rechargeable lithium battery according to some embodiments.
FIG. 3 is a diagram showing stress during charge and discharge.
FIG. 4 to FIG. 7 are cross-sectional views of rechargeable lithium batteries according to embodiments.

**DETAILED DESCRIPTION**

The subject matter of the present disclosure may be modified in many alternate forms, and thus example embodiments will be illustrated in the drawings and described in more detail. It should be understood, however, that it is not intended to limit the present disclosure to the particular forms disclosed, but rather, is intended to cover all modifications, equivalents, and alternatives falling within the spirit and scope of the present disclosure.

Hereinafter, embodiments of the present disclosure will be described in more detail. However, these embodiments are merely examples, the present disclosure is not limited thereto and the present disclosure is defined by the scope of the appended claims and equivalents thereof.

In the present disclosure, if a definition is not otherwise provided, it will be understood that if an element such as a layer, film, region, or substrate is referred to as being "on" another element, it may be directly on the other element or intervening elements may also be present therebetween.

Unless otherwise specified in the specification, the singular forms "a," "an," "one," and "the" are intended to include the plural forms as well, unless the context clearly indicates otherwise. Further, the use of "may" if describing embodiments of the present disclosure refers to "one or more embodiments of the present disclosure". As utilized herein, "A and/or B" may indicate "A or B or both (e.g., simultaneously) of them". Further, the "/" utilized herein may be interpreted as "and" or as "or" depending on the situation. Expressions such as "at least one of," "one of," and "selected from," if preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., concurrently or simultaneously) a and b, both (e.g., concurrently or simultaneously) a and c, both (e.g., concurrently or simultaneously) b and c, all of a, b, and c, or variations thereof.

As used herein, the term "combination thereof" may include a mixture, a laminate, a complex, a copolymer, an alloy, a blend, and/or a reactant of constituents (e.g., a reaction product of reactants).

As utilized herein, if a definition is not otherwise provided, a particle diameter/size may be an average particle diameter. Such a particle diameter/size indicates an average particle diameter/size (D50) where a cumulative volume is about 50 volume% in a particle size distribution. The particle diameter/size (D50) may be measured by any suitable method generally used in the art, for example, by a particle size analyzer, and/or by a transmission electron microscopic (TEM) image, and/or a scanning electron microscopic (SEM) image. In some embodiments, a dynamic light-scattering measurement device may be utilized to perform a data analysis, and the number of particles is counted for each particle size range, and from the data, the average particle diameter/size (D50) value may be easily obtained through a calculation. The particle size may be measured by a laser diffraction method. The laser diffraction may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter/ size (D50) in the 50% standard of particle distribution in the measuring device.

In some embodiments, an average particle diameter may be measured by various suitable techniques, and for example, may be measured by a particle size analyzer.

In some embodiments, a thickness may be measured by a SEM and/or a TEM image for the cross-section, but is not limited thereto, and it may be measured by any suitable techniques, as long as it may measure a thickness relevant in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are substantially not and/or slightly graphitized by heat treatment. The soft carbon and the hard carbon may be any suitable ones generally used in the related art.

One or more embodiments provide a negative electrode for a rechargeable lithium battery including a current collector; and a negative active material layer, and the negative active material layer includes a first active material layer on the current collector and a second active material layer on the first active material layer. The first active material layer includes a first crystalline carbon, a Si-C composite, and a first binder, and the second active material layer includes a second crystalline carbon, a SiC composite, and a second binder. A particle diameter of the first crystalline carbon is smaller than that of the second crystalline carbon and based on total negative active material layer, an amount of the first binder is larger than that of the second binder. An amount of the Si in the negative active material layer is about 3 wt% or more based on 100 wt% of the negative active material layer. The negative electrode has a DD (Degree of Divergence) value defined by Equation 1 of about 30 or more.

In some embodiments, the DD may be about 30 to about 60.

## Equation 1

$$DD \text{ (Degree of Divergence)} = (I_a/I_{total}) * 100$$

In Equation 1,
$I_a$ is a sum of peak intensities at non-planar angles measured by X-ray powder diffraction (XRD) using a CuKα ray, and $I_{total}$ is a sum of peak intensities at all angles measured by XRD using a CuKα ray.

The non-planar angles denote 2θ=42.4±0.2°, 43.4±0.2°, 44.6±0.2°, and 77.5±0.2° measured by XRD using a CuKα ray, for example, a (100) plane, a (101)R plane, a (101)H plane, and a (110) plane, respectively. In general, graphite has a structure classified into a rhombohedral structure and a hexagonal structure having an ABAB type (or kind) of stacking sequence according to a stacking order of graphene layers, and the R plane denotes the rhombohedral structure, while the H plane denotes the hexagonal structure.

Thus, the $I_a$ may be a sum of the peak intensities appearing at 2θ=42.4±0.2°, 43.4±0.2°, 44.6±0.2°, and 77.5±0.2° measured by XRD using a CuKα ray.

All the angles denote 2θ = 26.5±0.2°, 42.4±0.2°, 43.4±0.2°, 44.6±0.2°, 54.7±0.2°, and 77.5±0.2° if measured by XRD using a CuKα ray, for example, a (002) plane, a (100) plane, a (101)R plane, a (101)H plane, a (004) plane, and a (110) plane, respectively. A peak at 2θ = 43.4±0.2° may also appear by overlapping a peak of a (101)R plane of a carbon-based material with another peak of a (111) plane of a current collector, for example, Cu.

Thus, the $I_{total}$ may be a sum of peak intensities appearing at 2θ = 26.5±0.2°, 42.4±0.2°, 43.4±0.2°, 44.6±0.2°, 54.7±0.2°, and 77.5±0.2° if measured by XRD using a CuKα ray.

In general, peak intensity indicates a height of a peak or an integral area of the peak, and according to an embodiment, the peak intensity indicates the integral area of a peak.

In some embodiments, the XRD is measured by using a CuKα ray as a target ray and is measured under a measurement condition of 2θ = 10° to 80°, a scan speed (°/S) of 0.044 to 0.089, and a step size (°/step) of 0.013 to 0.039 by using a CuKα ray as a target ray but removing a monochromator to improve a peak intensity resolution, but the present disclosure is not limited thereto.

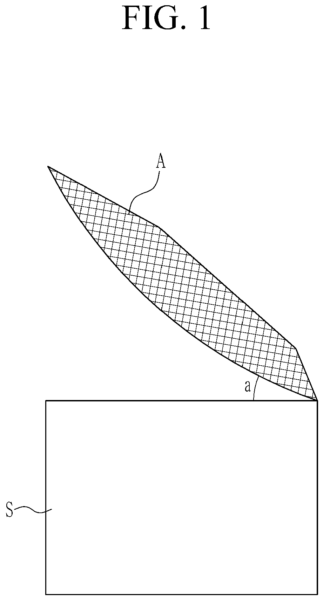

The DD values indicate that the negative active material included in the negative active material layer is oriented at a set or predetermined angle, and a larger value indicates that the negative active material is well oriented. For example, as schematically shown in FIG. 1, as the DD values is increased, an angle a is increased if the negative active material A is oriented to one side of the substrate S with the angle a. The DD values may be maintained after charging and discharging.

In some embodiments, if the DD value of the negative electrode is about 30 or more, the volume expansion of the negative electrode may be reduced during charge and discharge. If the DD value of the negative electrode is less than about 30, the effects for suppressing or reducing volume expansion of the negative electrode during charge and discharge may be not realized. For example, the horizontal volume expansion occurred if the negative electrode including the Si-C composite is charged and discharged may be effectively suppressed or reduced.

In some embodiments, the DD value is obtained by charging and discharging a rechargeable lithium battery including the negative electrode, disassembling the battery if completely discharged to obtain the negative electrode, and measuring the negative electrode by XRD. The charge and discharge are performed once or twice at about 0.1 C to about 0.2 C.

In some embodiments, the DD value of the first active material layer may be the same with that of the second active material layer.

The negative electrode according to some embodiments includes two layers of the first active material layer and the second active material layer, and the first active material layer is on the current collector, for example, is positioned in contact with the current collector and the second active material layer is positioned on the first active material layer, and for example, is positioned on an outermost surface of the negative active material layer.

In some embodiments, the first active material layer includes a first crystalline carbon, a Si-C composite, and a first binder, and the second active material layer includes a second crystalline carbon, a Si-C composite, and a second binder, and a particle diameter of the first crystalline carbon is smaller than the particle diameter of the second crystalline carbon. In some embodiments, the first crystalline carbon, the Si-C composite, and the second crystalline carbon are each a negative active material, and for example, the first active material layer includes the first crystalline carbon and the Si-C composite, as the negative active material, and the second active material layer includes the second crystalline carbon and the Si-C composite, as the negative active material.

In one or more embodiments, a ratio of the particle diameter of the first crystalline carbon and the particle diameter of the second crystalline carbon may be about 1:1.5 to about 1:4, about 1:2 to about 1:4, or about 1:2 to about 1:3. If the ratio of the particle diameter of the first crystalline carbon and the particle diameter of the second crystalline carbon satisfies the above ranges, the adhesion characteristics between the current collector and the active material may be further enhanced and a larger distribution on the surface of the active material layer may be inhibited or reduced, thereby reducing ionic resistance.

If a particle diameter of the first crystalline carbon included in the first active material layer directly contacted with the current collector is smaller than that of the second crystalline carbon included in the second active material layer provided as the upper layer, binder cohesion may be suppressed or reduced in the first active material layer, thereby achieving anchoring effects and thus, excellent adhesion between the current collector and the active material layer may be achieved.

The particle diameter of the first crystalline carbon may be about 4 $\mu$m to about 10 $\mu$m, about 5 $\mu$m to about 10 $\mu$m, or about 6 $\mu$m to about 10 $\mu$m.

The particle diameter of the second crystalline carbon may be about 6 $\mu$m to about 20 $\mu$m, about 10 $\mu$m to about 20 $\mu$m, or about 12 $\mu$m to about 20 $\mu$m.

The particle diameter may be an average particle diameter (D50).

In some embodiments, if the particle diameter of the first crystalline carbon is smaller than the particle diameter of the second crystalline carbon and the particle diameters of the first crystalline carbon and the second crystalline carbon are within the above ranges, adhesion between the current collector and the active material layer may be further improved.

The first crystalline carbon and the second crystalline carbon may be the same or different, and may be unspecified-shaped, a sheet-shaped, a flake-shaped, a spherical-shaped and/or a fiber-shaped artificial graphite, natural graphite, or a combination thereof.

In some embodiments, an amount of the first binder is larger than that of the second binder. An amount of the binder represents an amount based on a total amount of the negative active material layer, and does not represent an amount included in each layer, if the amount of each layer is considered as 100 wt%. For example, if the total amounts of the first active material layer and the second active material layer are converted to 100 wt%, an amount of the first binder is larger than that of the second binder.

If the amount of the first binder is larger than that of the second binder, adherence between the current collector and the active material layer may be further improved and the ionic resistance may be reduced.

In the entire negative active material layer, a ratio of the amount of the first binder and the amount of the second binder may be about 60:40 to about 90:10 by weight ratio, about 65:35 to about 90:10 by weight ratio, or about 70:30 to about 90:10 by weight ratio. The ratio of the amounts of the first binder and the second binder indicates the distribution ratio between the binders included in the first active material layer and the second active material layer, if the total amounts included in the negative active material layer are converted to 100 wt%. For example, the ratio of the amount of the first binder and the amount of the second binder of about 60:40 indicates that the amount of the first binder is about 60 wt% and the amount of the second binder is about 40 wt% based on 100 wt% of the amount of the binder included in the total negative active material layer.

If the amount of the first binder included in the first active material layer directly contacted with the current collector is about 60 to about 90 by weight ratio, the adherence between the current collector and the active material layer may be further enhanced. If the amount of the second binder included in the second active material layer provided in the upper layer is about 40 to about 10 by weight ratio, the low amount of the binder may render to improve tortuosity, thereby further reducing ionic resistance.

In some embodiments, an amount of the first binder may be, based on 100 wt% of the negative active material layer, about 1.5 wt% to about 5 wt%, about 2 wt% to about 5 wt%, about 2 wt% to about 4 wt%, or about 2 wt% to about 3 wt%. If the amount of the first binder satisfies the above ranges, adherence between the current collector and the active material layer may be further enhanced and the separation of the active material may be more effectively prevented or reduced during charge and discharge.

An amount of the second binder may be, based on 100 wt% of the negative active material layer, about 0.3 wt% to about 1 wt%, about 0.3 wt% to about 0.8 wt%, or about 0.3 wt% to about 0.7 wt%. If the amount of the second binder is within the above ranges, the ionic resistance may be further reduced and migration of the binder may be further suppressed or reduced.

The first binder and the second binder may be the same as or different from one another, and may be a non-aqueous binder, an aqueous binder, or a combination thereof.

The non-aqueous binder may be polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

The aqueous binder may be a cellulose compound, or may be the cellulose compound together with the aqueous binder. The cellulose compound includes one or more selected from carboxymethyl cellulose, hydroxypropylmethyl cellulose, methyl cellulose, or alkali metal salts thereof. The alkali metal may be Na, K, and/or Li.

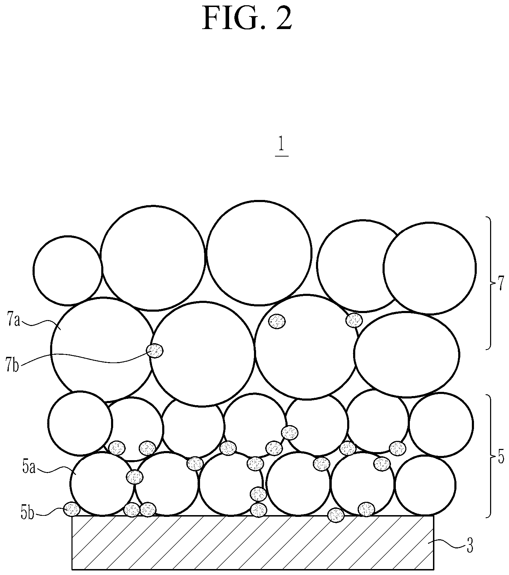

FIG. 2 schematically shows the negative electrode 1 according to some embodiments, including the first active material layer 5 between the current collector 3 and the second active material layer 7. The first active material layer 5 includes a first active material 5a and a first binder 5b and the second active material layer 7 includes the second active material 7a and the second binder 7b. As shown in FIG. 2, the first active material 5a has a smaller particle diameter than that of the second active material 7a and the first binder 5b is included in a larger amount than the second binder 7b.

In some embodiments an amount of Si may be, based on the total 100 wt% of the negative active material layer, about 3 wt% or more, about 3 wt% to about 10 wt%, or 5 wt% to 10 wt%. In some embodiments, the amount of Si represents an amount of Si included in the Si-C composite and represents total amounts of Si included in the first active material layer and the second active material layer. If the amount of Si is about 3 wt% or more based on the total 100 wt% of the negative active material layer, high-capacity may be obtained and excellent energy density may be obtained. Considering the energy density, the amount of Si may be at most about 10 wt% based on the total 100 wt% of the negative active material layer.

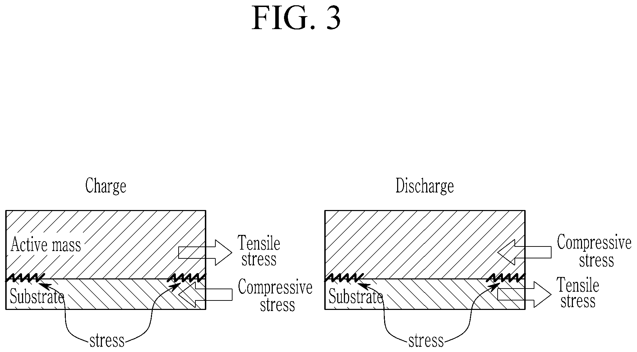

The negative electrode according to some embodiments includes the Si-C composite as one of the negative active materials. In the negative electrode, the amount of Si of about 3 wt% or more based on the total 100 wt% of the negative active material layer may achieve high-capacity and the volume expansion due to the high Si amount during charge and discharge may be suppressed or reduced by the negative active material which is an oriented layer having a DD value of about 30 or more. For example, as shown in FIG. 3, the volume expansion of the negative electrode including Si may occur in a horizontal direction. However, if the oriented layer with the DD value of about 30 or more, the negative active material is included in the negative active material layer at a set or predetermined angle to the current collector, for example, standing in a vertical direction, and thus, the expansion negative active material layer may occur in a vertical direction. This enables absorption of the horizontal and the vertical expansions of the negative active material layer by each other, thereby effectively suppressing or reducing the volume expansion.

The larger amount of the binder in the first active material layer than in the second active material layer may improve the adhesion between the current collector and the active material layer and reduce ionic resistance.

In one or more embodiments, the Si-C composite may include Si and amorphous carbon. For example, the Si-C composite may include silicon particles and an amorphous carbon coated on the surface of the silicon particle. For example, the silicon-carbon composite may include silicon particles and an amorphous carbon coating layer on the surface of the silicon particles. In some embodiments, it may include secondary particles (e.g., a core) where silicon primary particles are agglomerated and an amorphous carbon coating layer (e.g., a shell) on the surface of the secondary particles. The amorphous carbon may be between the silicon primary particles, for example, to coat on the silicon primary particles. For example, the secondary particle may be provided by being distributed in an amorphous carbon matrix. The silicon primary particles may be nano silicon particles. The nano silicon particle may have a particle diameter of about 10 nm to about 900 nm, about 10 nm to about 800 nm, about 10 nm to about 500 nm, about 10 nm to about 300 nm, or about 10 nm to about 200 nm. If the average particle diameter of the nano silicon particles is within the above ranges, extreme volume expansion caused during charge and discharge may be suppressed or reduced, and a breakage of the conductive path due to crushing of particle may be prevented or reduced. In some embodiments, the particle diameter of the silicon secondary particle is not necessarily limited.

The amorphous carbon may include a soft carbon, a hard carbon, a mesophase pitch carbonization product, calcined coke, and/or the like. The thickness of the amorphous carbon coating layer may be suitably or appropriately adjusted, and for example, may be about 2 nm to about 800 nm, about 5 nm to about 600 nm, about 10 nm to about 400 nm, or about 20 nm to about 200 nm. In one or more embodiments, the thickness of the amorphous carbon coating layer may be measured by a SEM image and/or a TEM image for the cross-section of the silicon-carbon composite, but it is not limited thereto, and thus, it may be measured by any suitable techniques as long as the thickness of the amorphous carbon coating layer is suitably measured.

Based on 100 wt% of the Si-C composite, an amount of the silicon particle may be about 30 wt% to about 70 wt%, or about 40 wt% to about 65 wt%. An amount of the amorphous carbon may be, based on the total 100 wt% of the Si-C composite, about 30 wt% to about 70 wt%, or about 35 wt% to about 60 wt%. If the amounts of the silicon particles and the amorphous carbon are within the above ranges, higher capacity may be realized.

In embodiments, the Si-C composite may include Si, amorphous carbon, and crystalline carbon. In some embodiments, the Si-C composite may include a core including silicon particles and crystalline carbon and an amorphous carbon coating layer on the surface of the core. For example, the Si-C composite may include a core including secondary particles where the silicon primary particles and crystalline carbon are agglomerated, and an amorphous carbon coating layer on the core. The amorphous carbon may be between the silicon primary particles and/or between the crystalline carbon, allowing the amorphous carbon to fill between the silicon primary particles and/or the crystalline carbon.

The crystalline carbon may include unspecified shape, sheet, flake, spherical and/or fiber shaped natural graphite and/or artificial graphite.

An amount of the crystalline carbon may be, based on the total 100 wt% of the silicon particle, the amorphous carbon, and the crystalline carbon, about 1 wt% to about 20 wt%, for example, about 3 wt% to about 17 wt%, or about 5 wt% to about 15 wt%. If the crystalline carbon is included in the above ranges, the conductivity (e.g., electrical conductivity) may be further enhanced.

The particle diameter of the Si-C composite may be suitably or appropriately adjusted, and for example, may be about 30 $\mu$m or less, for example, about 1 $\mu$m to about 30 $\mu$m, about 2 $\mu$m to about 25 $\mu$m, about 3 $\mu$m to about 20 $\mu$m, or about 5 $\mu$m to about 15 $\mu$m.

The first active material layer and the second active material layer may further include a conductive material (e.g., an electrically conductive material).

The conductive material may be included to provide electrode conductivity (e.g., electrical conductivity). Any suitable electrically conductive material may be utilized as a conductive material (e.g., an electrically conductive material) unless it causes a chemical change (e.g., an undesirable chemical change in the rechargeable lithium battery). Non-limiting examples of the conductive material may be a carbon-based material such as natural graphite, artificial graphite, carbon black, acetylene black, ketjen black, a carbon fiber, and/or the like; a metal-based material of a metal powder and/or a metal fiber including copper, nickel, aluminum, silver, and/or the like; a conductive polymer (e.g., an electrically conductive polymer) such as a polyphenylene derivative; or one or more mixtures (and/or combinations) thereof.

Hereinafter, compositions for each layer will be further described.

In the first active material layer, an amount of the first crystalline carbon may be, based on the total 100 wt% of the first active material layer, about 78 wt% to about 95 wt%, or about 80 wt% to about 95 wt%. An amount of the Si-C composite may be, based on the total 100 wt% of the first active material layer, about 3 wt% to about 20 wt%, or about 3 wt% to about 18 wt%.

An amount of the first binder may be about 2 wt% to about 10 wt% based on the total 100 wt% of the first active material layer.

If the first active material layer further includes the conductive material, an amount of the conductive material may be, based on the total 100 wt% of the first active material layer, about 0.02 wt% to about 0.1 wt%.

In the second active material layer, an amount of the second crystalline carbon may be, based on the total 100 wt% of the second active material layer, about 78 wt% to about 95 wt%, or about 80 wt% to about 93 wt%. An amount of the Si-C composite may be, based on the total 100 wt% of the second active material layer, about 3 wt% to about 20 wt%, or about 3 wt% to about 18 wt%.

An amount of the second binder may be about 0.3 wt% to about 2 wt% based on the total 100 wt% of the second active material layer.

If the second active material layer further includes the conductive material, an amount of the conductive material may be about 0.02 wt% to about 0.1 wt% based on the total 100 wt% of the second active material layer.

The first active material layer may have a thickness of about 20 $\mu$m to about 150 $\mu$m, about 30 $\mu$m to about 150 $\mu$m, or about 50 $\mu$m to about 150 $\mu$m. If the thickness of the first active material layer falls within the above ranges, the binder may be more suitably or appropriately distributed.

The second active material layer may have a thickness of about 100 $\mu$m to about 300 $\mu$m, about 130 $\mu$m to about 250 $\mu$m, or about 150 $\mu$m to about 250 $\mu$m. If the thickness of the second active material layer is within the above ranges, the pores may be more suitably or appropriately distributed.

The current collector may include one selected from a copper foil, a nickel foil, a stainless steel foil, a titanium foil, a nickel foam, a copper foam, a polymer substrate coated with a conductive metal (e.g., an electrically conductive metal), and one or more combinations thereof, but embodiments of the present disclosure are not limited thereto.

An active mass density of the negative electrode may be about 1.0 g/cc to about 2.0 g/cc, about 1.2 g/cc to about 1.8 g/cc, or about 1.3 g/cc to about 1.7 g/cc. In some embodiments, the active mass indicates a solid mixture of the active material, the binder, and optionally, the conductive material. For example, the active mass indicates an active material layer. In some embodiments, the active mass density may be a density of the active material layer. If the active mass density of the negative electrode is within the above ranges, more high-capacity battery may be provided.

**Method of preparing a negative electrode for a rechargeable lithium battery**

A negative electrode according to one or more embodiments may be prepared by coating a negative active material composition on a current collector, while applying a magnetic field. Hereinafter, each procedure will be described in more detail.

A magnet is under a current collector and a first active material layer composition is coated on the current collector and dried to prepare a first active material layer. Thereafter, the second active material layer composition may be coated on the first active material layer, dried, and pressurized (e.g., pressed) to prepare a second active material layer.

The coating may be performed by moving the current collector in the direction of coating while the magnet is under the current collector. For example, the magnetic field (magnetic flux) by the magnet is formed vertically with respect to the current collector, but the magnetic field, depending on the coating speed (a speed of moving the current collector), is formed at a set or predetermined angle as a vector function. The crystalline carbon as one of the negative active materials, for example, may be oriented by the set or predetermined angle with respect to the current collector.

If the first active material layer and the second active material layer are on the both sides of the current collector, the first active material layer is on one side of the current collector; the other first active material layer is on a corresponding side on which the first active material layer is not formed, to the side on which the first active material layer is formed; and the second active material layers are on the two first active material layers. In some embodiments, a first active material layer and a second active material layer may be sequentially on one side of the current collector, and a first active material layer and a second active material layer may be sequentially on other side corresponding to the side of the current collector.

The magnet may have strength of a magnetic field of about 2500 Gauss to about 10000 Gauss. The negative active material composition may be coated on the current collector and maintained for about 3 seconds to about 15 seconds, for example, may be exposed to the magnetic field for about 3 seconds to about 15 seconds. In one embodiment, the time for exposing to the magnetic field may be about 3 seconds to about 12 seconds. Depending on the time for exposing to the magnetic field, the obtained DD value may be varied.

The DD value may be also obtained by adjusting a viscosity of the negative active material layer composition.

The viscosity of the active material layer composition may be about 2000 cps to about 4000 cps, about 2000 cps to about 3500 cps, or about 2500 cps to about 3500 cps at room temperature (about 20 °C to about 25 °C). In some embodiments, the viscosity may be measured by using a Brookfield viscometer at room temperature, for example, about 20 °C to about 25 °C. In some embodiments, the respective viscosities of the first active material layer and the second active material layer composition may be identically adjusted.

If the viscosities of the first active material layer composition and the second active material layer composition satisfy the above ranges, the first active material layer and the second active material layer having the desired DD values may be obtained.

If the respective viscosities of the first active material and the second active material layer composition are below the above ranges it may cause an extreme increase in a degree of verticality of the crystalline carbon-based negative active material which results in insufficient or unsuitable contact of the negative active material particle, and thus, the electron transference resistance may be increased, whereas higher viscosity above the above ranges may reduce the effect of the orientation, thereby reducing the impregnability of the electrolyte.

The first active material layer composition and the second active material layer composition may be prepared by mixing together a crystalline carbon, a Si-C composite, a binder, and optionally a conductive material (e.g., an electrically conductive material) in a solvent.

The solvent may be an organic solvent such as N-methyl pyrrolidone, or water, and if the aqueous binder is used as the binder, the solvent may be water.

**Rechargeable lithium battery**

Another embodiment provides a rechargeable lithium battery including the negative electrode, a positive electrode, and an electrolyte.

**Positive electrode**

The positive electrode may include a current collector and a positive active material layer on the current collector. The positive active material layer includes a positive active material and may further include a binder and/or a conductive material (e.g., an electrically conductive material).

For example, the positive electrode may further include an additive that may serve as a sacrificial positive electrode.

An amount of the positive active material may be, about 90 wt% to about 99.5 wt% based on 100 wt% of the positive active material layer, and amounts of the binder and the conductive material may be respectively 0.5 wt% to 5 wt% based on 100 wt% of the positive active material layer.

The positive active material may include a compound (e.g., a lithiated intercalation compound) that is capable of intercalating and deintercalating lithium. In some embodiments, at least one of a composite oxide of lithium and a metal selected from cobalt, manganese, nickel, or combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, the compounds represented by any one of the following chemical formulas may be used. $Li_aAi_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 <_\alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$ ); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$);

$Li_aMn_{1-g}G_gPO_4$ (0.90≤a≤1.8, 0≤g≤0.5); $Li_{(3-f)}Fe_2(PO_4)_3$ (0≤f≤2); $Li_aFePO_4$ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

For example, the positive active material may be may be a high nickel-based positive active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive active material may realize high capacity and may be applied to a high-capacity, high-density rechargeable lithium battery.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but are not limited thereto.

The conductive material is included to provide electrode conductivity (e.g., electrical conductivity), and any suitable electrically conductive material may be used as a conductive material (e.g., an electrically conductive material) unless it causes a chemical change (e.g., an undesirable chemical change in the rechargeable lithium battery). Examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

The current collector may include Al, but is not limited thereto.

## Electrolyte

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The organic solvent may be used alone or in a mixture of two or more thereof.

If the carbonate-based solvent is used, the cyclic carbonate and the linear carbonate may be used together therewith, and the cyclic carbonate and the linear carbonate may be mixed together at a volume ratio of about 1:1 to about 1:9.

The lithium salt dissolved in an organic solvent supplies a battery with lithium ions, basically operates the rechargeable lithium battery, and improves transportation of the lithium ions between positive and negative electrodes. Examples of the lithium salt include one or at least two supporting electrolyte salt selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, where x and y are an integer of 1 to 20, lithium trifluoromethane sulfonate, lithium tetrafluoroethane sulfonate, lithium difluorobis(oxalato)phosphate (LiDFOP), and lithium bis(oxalato) borate (LiBOB).

## Separator

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film including any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acryl-based polymer.

The inorganic material may be an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_s$, $BaTiO_s$, $Mg(OH)_2$, boehmite, or a combination thereof, but is not limited thereto.

The organic material and an inorganic material may be mixed together in one coating layer, or a coating layer including an organic material and a coating layer including an inorganic material may be stacked.

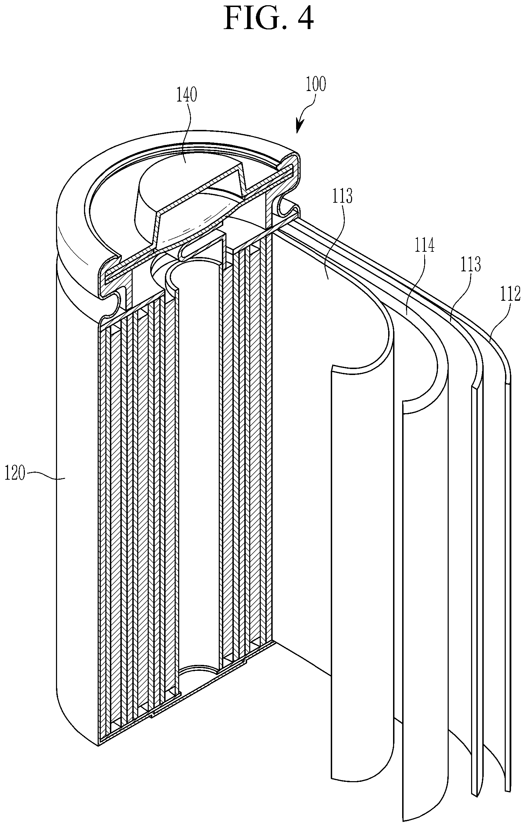

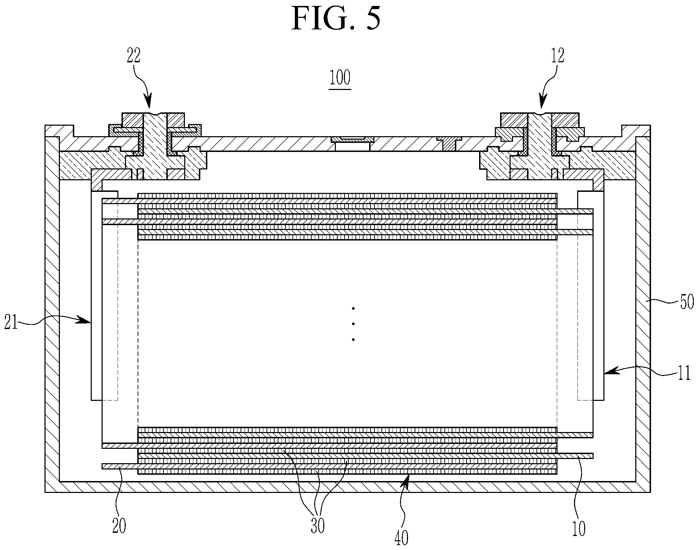

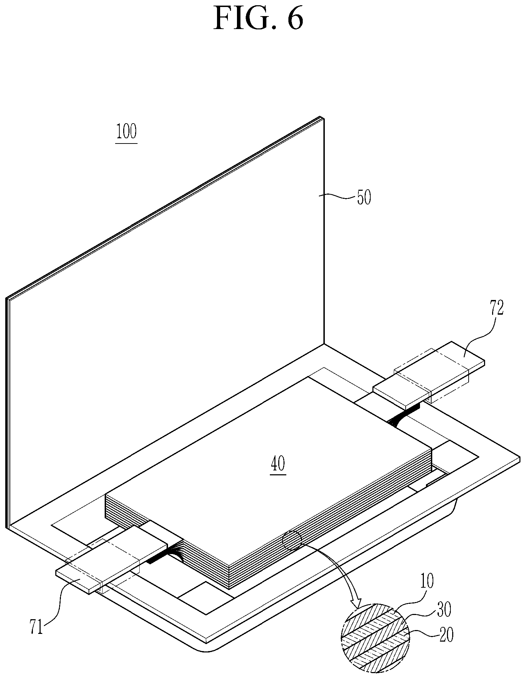

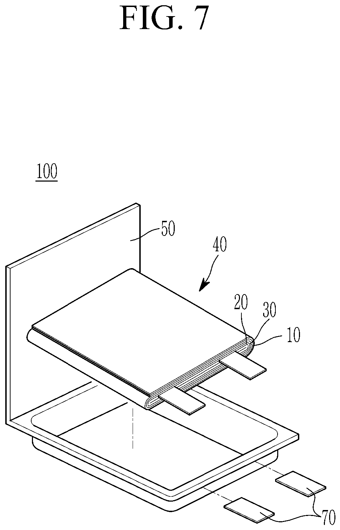

The rechargeable lithium battery may be classified into cylindrical, prismatic, pouch, or coin-type batteries, and/or the like depending on their shape. FIG. 4 to FIG. 7 are schematic views illustrating a rechargeable lithium battery according to embodiments, and FIG. 4 shows a cylindrical battery, FIG. 5 shows a prismatic battery, and FIG. 6 and FIG. 7 show pouch-type batteries. Referring to FIGS. 4-7, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 that seals the case 50, as shown in FIG. 5. In FIG. 5, the rechargeable lithium battery 100 may include a positive electrode lead tab 11 and a positive terminal 12, a negative electrode lead tab 21, and a negative terminal 22. As shown in FIG. 6 and FIG. 7, the rechargeable lithium battery 100 may include an electrode tab 70 (FIG. 7), which may serve as an electrical path for inducing the current formed in the electrode assembly 40 to the outside, for example, a positive electrode tab 71 and a negative electrode tab 72 (FIG. 6).

The rechargeable lithium battery according to an embodiment may be applied to automobiles, mobile phones, and/or various suitable types (or kinds) of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Example.

**Example 1**

91.2 wt% of artificial graphite (average particle diameter (D50): 6 μm), 4.4 wt% of a Si-C composite, 3.6 wt% of a styrene-butadiene rubber, and 0.8 wt% of carboxymethyl cellulose were mixed together in a water solvent to prepare a first active material layer slurry having a viscosity of 2500 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

94.4 wt% of artificial graphite (average particle diameter (D50): 15 μm), 4.4 wt% of a Si-C composite, 0.4 wt% of a styrene-butadiene rubber, and 0.8 wt% of carboxymethyl cellulose were mixed together in a water solvent to prepare a second active material layer slurry having a viscosity of 2650 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

The Cu foil current collector was on a magnet having a magnetic field strength of 6000 Gauss, while the Cu foil current collector was moved, the first active material layer slurry was coated on the current collector and exposed to a magnetic field for 10 seconds and dried to prepare a first active material layer having a thickness of 103 μm.

Thereafter, the second active material layer slurry was coated on the first active material layer and exposed to a magnetic field for 10 seconds and dried to prepare a second active material layer with a thickness of 206 μm.

Thereafter, the pressurization was carried out to prepare a negative electrode having an active mass density of 1.6 g/cc.

In the prepared negative electrode, an amount of Si was 3 wt% based on the total of the first active material layer and the second active material layer, i.e., the total 100 wt% of the negative active material layer.

96 wt% of a LiCoO$_2$ positive active material, 2 wt% of a carbon black conductive agent, and 2 wt% of a polyvinylidene fluoride binder were mixed together in an N-methyl pyrrolidone solvent to prepare a positive active material slurry. The prepared slurry was coated on an Al current collector, dried, and pressurized to prepare a positive electrode.

The negative electrode, the positive electrode, and an electrolyte were used to fabricate a rechargeable lithium full cell. The electrolyte was used by dissolving 1.5 M LiPF$_6$ in a mixed solvent of ethylene carbonate, ethylmethyl carbonate, and dimethyl carbonate (20:10:70 by volume ratio).

**Example 2**

88.6 wt% of artificial graphite (average particle diameter (D50): 6 μm), 7 wt% of the Si-C composite of Example 1, 3.6 wt% of a styrene-butadiene rubber, and 0.8 wt% of carboxymethyl cellulose were mixed together in a water solvent to prepare a first active material layer slurry having a viscosity of 2500 cps (at 25 °C).

91.8 wt% of artificial graphite (average particle diameter (D50): 15 μm), 7 wt% of the Si-C composite of Example 1, 0.4 wt% of a styrene-butadiene rubber, and 0.8 wt% of carboxymethyl cellulose were mixed together in a water solvent to prepare a second active material layer slurry having a viscosity of 2650 cps (at 25 °C).

A negative electrode having an active mass density of 1.6 g/cc was prepared by the same procedure as in Example 1, except for using the first active material layer slurry and the second active material layer slurry.

In the prepared negative electrode, an amount of Si was 5 wt% based on the total of the first active material layer and the second active material layer, i.e., the total 100 wt% of the negative active material layer.

A rechargeable lithium cell was fabricated by the same procedure as in Example 1, except for using the negative electrode described above.

**Comparative Example 1**

A negative electrode having an active mass density of 1.6 g/cc was prepared by the same procedure as in Example 1, except that the Cu foil current collector was positioned on a magnet having a magnetic field strength of 2000 Gauss, while the Cu foil current collector was moved, the first active material layer slurry of Example 1 was coated on the current collector and dried to prepare a first active material layer having a thickness of 103 μm and the second active material layer slurry of Example 1 was coated on the first active material layer and dried to prepare a second active material layer having a thickness of 206 μm.

A rechargeable lithium cell was fabricated by the same procedure as in Example 1, except for using the negative electrode described above.

**Comparative Example 2**

A negative electrode having an active mass density of 1.6 g/cc was prepared by the same procedure as in Example 2, except that the Cu foil current collector was positioned on a magnet having a magnetic field strength of 2000 Gauss, while the Cu foil current collector was moved, the first active material layer slurry of Example 2 was coated on the current collector and dried to prepare a first active material layer having a thickness of 103 μm and the second active material layer slurry of Example 2 was coated on the first active material layer and dried to prepare a second active material layer having a thickness of 206 μm.

A rechargeable lithium cell was fabricated by the same procedure as in Example 1, except for using the negative electrode described above.

**Comparative Example 3**

96.8 wt% of artificial graphite (average particle diameter (D50): 15 μm), 2 wt% of a Si-C composite, 0.4 wt% of a styrene-butadiene rubber, and 0.8 wt% of carboxymethyl cellulose were mixed together in a water solvent to prepare a first active material layer slurry having a viscosity of 2530 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

93.6 wt% of artificial graphite (average particle diameter (D50): 15 μm), 2 wt% of a Si-C composite, 3.6 wt% of a styrene-butadiene rubber, and 0.8 wt% of carboxymethyl cellulose were mixed together in a water solvent to prepare a second active material layer slurry having a viscosity of 2560 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

The Cu foil current collector was positioned on a magnet having a magnetic field strength of 2000 Gauss, while the Cu foil current collector was moved, the first active material layer slurry was coated on the current collector to be exposed a magnetic field for 10 seconds and dried to prepare a first active material layer having a thickness of 102 $\mu$m.

Thereafter, the second active material layer slurry was coated on the first active material layer to be exposed a magnetic field for 10 seconds and dried to prepare a second active material layer having a thickness of 205 $\mu$m.

Thereafter, the pressurization was carried out to prepare a negative electrode having an active mass density of 1.6 g/cc.

In the prepared negative electrode, an amount of Si was 1.5 wt% based on the total of the first active material layer and the second active material layer, i.e., the total 100 wt% of the negative active material layer.

A rechargeable lithium cell was fabricated by the same procedure as in Example 1, except for using the negative electrode described above.

## Comparative Example 4

A negative electrode with an active mass density of 1.6 g/cc was prepared by the same procedure as in Comparative Example 3, except that the magnetic field strength was changed into 4000 Gauss.

A rechargeable lithium cell was fabricated by the same procedure as in Example 1, except for using the negative electrode described above.

## Comparative Example 5

91.2 wt% of artificial graphite (average particle diameter (D50): 15 $\mu$m), 4.4 wt% of the Si-C composite of Example 1, 3.6 wt% of a styrene-butadiene rubber, and 0.8 wt% of carboxymethyl cellulose were mixed together in a water solvent to prepare a first active material layer slurry having a viscosity of 2530 cps (at 25 °C).

94.4 wt% of artificial graphite (average particle diameter (D50): 15 $\mu$m), 4.4 wt% of the Si-C composite of Example 1, 0.4 wt% of a styrene-butadiene rubber, and 0.8 wt% of carboxymethyl cellulose were mixed together in a water solvent to prepare a second active material layer slurry having a viscosity of 2560 cps (at 25 °C).

A negative electrode having an active mass density of 1.6 g/cc was prepared by the same procedure as in Comparative Example 3, except that the first active material layer slurry and the second active material layer slurry were coated.

In the prepared negative electrode, an amount of Si was 3 wt% based on the total of the first active material layer and the second active material layer, i.e., the total 100 wt% of the negative active material layer.

A rechargeable lithium cell was fabricated by the same procedure as in Example 1, except for using the negative electrode described above.

## Comparative Example 6

A negative electrode having an active mass density of 1.6 g/cc was prepared by the same procedure as in Comparative Example 5, except that the magnetic field strength was changed to 6000 Gauss.

A rechargeable lithium cell was fabricated by the same procedure as in Example 1, except for using the negative electrode described above.

## Comparative Example 7

88.6 wt% of artificial graphite (average particle diameter (D50): 15 $\mu$m), 7 wt% of the Si-C composite of Example 1, 3.6 wt% of a styrene-butadiene rubber, and 0.8 wt% of carboxymethyl cellulose were mixed together in a water solvent to prepare a first active material layer slurry having a viscosity of 2530 cps (at 25 °C).

91.8 wt% of artificial graphite (average particle diameter (D50): 15 $\mu$m), 7 wt% of the Si-C composite of Example 1, 0.4 wt% of a styrene-butadiene rubber, and 0.8 wt% of carboxymethyl cellulose were mixed together in a water solvent to prepare a second active material layer slurry having a viscosity of 2560 cps (at 25 °C).

A negative electrode having an active mass density of 1.6 g/cc was prepared by the same procedure as in Comparative Example 3, except for using the first active material layer slurry and the second active material layer slurry described above.

In the prepared negative electrode, an amount of Si was 5 wt% based on the total of the first active material layer and the second active material layer, i.e., the total 100 wt% of the negative active material layer.

A rechargeable lithium cell was fabricated by the same procedure as in Example 1, except for using the negative electrode described above.

## Comparative Example 8

A negative electrode was prepared by the same procedure as in Comparative Example 7, except that the magnetic field strength was changed to 6000 Gauss.

A rechargeable lithium cell was fabricated by the same procedure as in Example 1, except for using the negative electrode described above.

## Comparative Example 9

81.6 wt% of artificial graphite (average particle diameter (D50): 15 $\mu$m), 14 wt% of the Si-C composite of Example 1, 3.6 wt% of a styrene-butadiene rubber, and 0.8 wt% of carboxymethyl cellulose were mixed together in a water solvent to prepare a first active material layer slurry having a viscosity of 2530 cps (at 25 °C).

84.8 wt% of artificial graphite (average particle diameter (D50): 15 $\mu$m), 14 wt% of the Si-C composite of Example 1, 0.4 wt% of a styrene-butadiene rubber, and 0.8 wt% of carboxymethyl cellulose were mixed together in a water solvent to prepare a second active material layer slurry having a viscosity of 2560 cps (at 25 °C).

A negative electrode having an active mass density of 1.6 g/cc was prepared by the same procedure as in Comparative Example 1, except that the first active material layer slurry was coated and dried to prepare a first active material layer having a thickness of 103 $\mu$m and the second active material layer slurry was coated on the first active material layer to prepare a second active material layer having a thickness of 206 $\mu$m. That is, the negative electrode as prepared without using a magnet and without applying a magnetic field.

In the prepared negative electrode, an amount of Si was 10 wt% based on the total of the first active material layer and the second active material layer, i.e., the total 100 wt% of the negative active material layer.

A rechargeable lithium cell was fabricated by the same procedure as in Example 1, except for using the negative electrode described above.

## Comparative Example 10

A negative electrode having an active mass density of 1.6 g/cc was prepared by the same procedure as in Comparative Example 9, except that the Cu foil current collector was positioned on a magnet having a magnetic field strength of 2000 Gauss, while the Cu foil current collector was moved, the first active material layer slurry of Comparative Example 9 was coated on the current collector and dried to prepare a first active material layer having a thickness of 103 $\mu$m and the second active material layer slurry of Comparative Example 9 was coated on the first active material layer and dried to prepare a second active material layer having a thickness of 206 $\mu$m.

A rechargeable lithium cell was fabricated by the same procedure as in Example 1, except for using the negative electrode described above.

## Comparative Example 11

88.7 wt% of artificial graphite (average particle diameter (D50): 6 $\mu$m), 8.5 wt% of the Si-C composite, 2 wt% of a styrene-butadiene rubber, and 0.8 wt% of carboxymethyl cellulose were mixed together in a water solvent to prepare a first active material layer slurry having a viscosity of 2500 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

88.7 wt% of artificial graphite (average particle diameter (D50): 15 $\mu$m), 8.5 wt% of the Si-C composite, 2 wt% of a styrene-butadiene rubber, and 0.8 wt% of carboxymethyl cellulose were mixed together in a water solvent to prepare a second active material layer slurry having a viscosity of 2600 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

The Cu foil current collector was positioned on a magnet having a magnetic field strength of 2000 Gauss, while the Cu foil current collector was moved, the first active material layer was coated on the current collector to be exposed a magnetic field for 10 seconds and dried to prepare a first active material layer having a thickness of 103 μm.

Thereafter, the second active material layer slurry was coated on the first active material layer to be exposed a magnetic field for 10 seconds and dried to prepare a second active material layer having a thickness of 206 μm.

Thereafter, the pressurization was carried out to prepare a negative electrode having an active mass density of 1.6 g/cc.

In the prepared negative electrode, an amount of Si was 6 wt% based on the total of the first active material layer and the second active material layer, i.e., the total 100 wt% of the negative active material layer.

A rechargeable lithium cell was fabricated by the same procedure as in Example 1, except for using the negative electrode described above.

**Comparative Example 12**

95.9 wt% of artificial graphite (average particle diameter (D50): 6 μm), 2.9 wt% of a Si-C composite, 0.4 wt% of a styrene-butadiene rubber, and 0.8 wt% of carboxymethyl cellulose were mixed together in a water solvent to prepare a first active material layer slurry having a viscosity of 2600 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

92.7 wt% of artificial graphite (average particle diameter (D50): 6 μm), 2.9 wt% of a Si-C composite, 3.6 wt% of a styrene-butadiene rubber, and 0.8 wt% of carboxymethyl cellulose were mixed together in a water solvent to prepare a second active material layer slurry having a viscosity of 2580 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

The Cu foil current collector was positioned on a magnet having a magnetic field strength of 2000 Gauss, while the Cu foil current collector was moved, the first active material layer was coated on the current collector to be exposed a magnetic field for 10 seconds and dried to prepare a first active material layer having a thickness of 102 μm.

Thereafter, the second active material layer slurry was coated on the first active material layer to be exposed a magnetic field for 10 seconds and dried to prepare a second active material layer having a thickness of 204 μm.

Thereafter, the pressurization was carried out to prepare a negative electrode having an active mass density of 1.6 g/cc.

In the prepared negative electrode, an amount of Si was 2.9 wt% based on the total of the first active material layer and the second active material layer, i.e., the total 100 wt% of the negative active material layer.

A rechargeable lithium cell was fabricated by the same procedure as in Example 1, except for using the negative electrode described above.

**Comparative Example 13**

91.8 wt% of artificial graphite (average particle diameter (D50): 6 μm), 7 wt% of the Si-C composite of Comparative Example 12, 0.4 wt% of a styrene-butadiene rubber, and 0.8 wt% of carboxymethyl cellulose were mixed together in a water solvent to prepare a first active material layer slurry having a viscosity of 2600 cps (at 25 °C).

88.6 wt% of artificial graphite (average particle diameter (D50): 6 μm), 7 wt% of the Si-C composite of Comparative Example 12, 3.6 wt% of a styrene-butadiene rubber, and 0.8 wt% of carboxymethyl cellulose were mixed together in a water solvent to prepare a second active material layer slurry having a viscosity of 2580 cps (at 25 °C).

The Cu foil current collector was positioned on a magnet having a magnetic field strength of 2000 Gauss, while the Cu foil current collector was moved, the first active material layer was coated on the current collector to be exposed a magnetic field for 10 seconds and dried to prepare a first active material layer having a thickness of 102 μm.

Thereafter, the second active material layer slurry was coated on the first active material layer to be exposed a magnetic field for 10 seconds and dried to prepare a second active material layer having a thickness of 204 μm.

Thereafter, the pressurization was carried out to prepare a negative electrode having an active mass density of 1.6 g/cc.

In the prepared negative electrode, an amount of Si was 5 wt% based on the total of the first active material layer and the second active material layer, i.e., the total 100 wt% of the negative active material layer.

A rechargeable lithium cell was fabricated by the same procedure as in Example 1, except for using the negative electrode described above.

**Comparative Example 14**

87.1 wt% of artificial graphite (average particle diameter (D50): 6 $\mu$m), 8.5 wt% of a Si-C composite, 3.6 wt% of a styrene-butadiene rubber, and 0.8 wt% of carboxymethyl cellulose were mixed together in a water solvent to prepare a first active material layer slurry having a viscosity of 2540 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

90.3 wt% of artificial graphite (average particle diameter (D50): 15 $\mu$m), 8.5 wt% of a Si-C composite, 0.4 wt% of a styrene-butadiene rubber, and 0.8 wt% of carboxymethyl cellulose were mixed in a water solvent to prepare a second active material layer slurry with a viscosity of 2610 cps (at 25 °C).

As the Si-C composite, a composite including a core including secondary particles where nano silicon primary particles (average particle diameter: 100 nm) were agglomerated, and a soft carbon coating layer on the core was used. In the Si-C composite, an amount of the nano silicon primary particles was 70 wt%, an amount of the soft carbon was 30 wt%, and the soft carbon coating layer had a thickness of 100 nm.

The Cu foil current collector was positioned on a magnet having a magnetic field strength of 2000 Gauss, while the Cu foil current collector was moved, the first active material layer was coated on the current collector to be exposed a magnetic field for 10 seconds and dried to prepare a first active material layer having a thickness of 102 $\mu$m.

Thereafter, the second active material layer slurry was coated on the first active material layer to be exposed a magnetic field for 10 seconds and dried to prepare a second active material layer having a thickness of 204 $\mu$m.

Thereafter, the pressurization was carried out to prepare a negative electrode having an active mass density of 1.6 g/cc.

In the prepared negative electrode, an amount of Si was 6 wt% based on the total of the first active material layer and the second active material layer, i.e., the total 100 wt% of the negative active material layer.

A rechargeable lithium cell was fabricated by the same procedure as in Example 1, except for using the negative electrode described above.

**Experimental Example 1) Measurement of X-ray diffraction characteristic**

The rechargeable lithium cells according to Examples 1 and 2, and Comparative Examples 1 to 14 were twice charged and discharged at 0.1 C and fully discharged at 0.1 C to 2.75 V. The fully-discharged battery cells were disassembled to obtain the negative electrode. As for these negative electrodes, X'Pert (PANalytical B.V.) XRD equipment using a CuK$\alpha$ ray as a target ray was used, but monochromator equipment was removed in order to improve a peak intensity resolution, and then an XRD was measured. The measurement was performed under a condition of 2$\theta$ = 10° to 80°, a scan speed (°/S) = 0.06436, and a step size of 0.026°/step.

From the measured XRD results, the DD values of each layers were calculated, and the results are shown in Table 2.

Among the XRD results, the integral areas of the peaks shown at 2$\theta$ = 26.5$\pm$0.2° ((002) plane), 42.4$\pm$0.2° ((100) plane), 43.4$\pm$0.2° ((101) R plane), 44.6$\pm$0.2° ((101) H plane), 54.7$\pm$0.2° ((004) plane), and 77.5$\pm$0.2° ((110) plane) were measured, and the area sum of peaks shown at 2$\theta$ = 42.4$\pm$0.2° ((100) plane), 43.4$\pm$0.2° ((101)R plane), 44.6$\pm$0.2° ((101) H plane), and 77.5$\pm$0.2° ((110) plane) as $I_a$, and the area sum of peaks shown at 2$\theta$ = 26.5$\pm$0.2° ((002) plane), 42.4$\pm$0.2° ((100) plane), 43.4$\pm$0.2° ((101)R plane), 44.6$\pm$0.2° ((101)H plane), 54.7$\pm$0.2° ((004) plane), and 77.5$\pm$0.2° ((110) plane) as $I_{total}$, and DD ($I_a/I_{total}$) was obtained by calculating from the values.

The amount of Si based on the total 100 wt% of the negative active material layer are shown in Table 2.

**Experimental Example 2) Evaluation of expansion ratio**

The rechargeable lithium cells according to Examples 1 and 2, and Comparative Examples 1 to 14 were charged and discharged under a SOC100 (fully charge, charged to be 100 % of charge capacity based on 100 % of entire battery charge capacity). The thickness of the cell after charging and discharging was measured.

For comparison, a negative electrode having an active mass density of 1.6 g/cc and a rechargeable lithium cell were fabricated by the same procedure as in Example 1, except that the first active material layer slurry of Example 1 was coated on a Cu foil current collector and dried to prepare a first active material layer with a thickness of 103 $\mu$m, and the second active material layer slurry of Example 1 was coated on the first active material layer and dried to prepare a second active material layer having a thickness of 206 $\mu$m. That is, the negative electrode was prepared by using no magnet and without applying a magnetic field.

The fabricated rechargeable lithium cell was charged and discharged under a SOC100 and then a cell thickness was measured. The measured cell thickness was used as a reference value.

The differences between the cell thicknesses of the cells according to Examples 1 and 2, and Comparative Examples 1 to 14 after charging and discharging, and the reference value were calculated. The results are shown in Table 2, as the effect of reducing expansion.

**Experimental Example 3) Evaluation of separation**

The negative electrodes according to Examples 1 and 2, and Comparative Examples 1 to 14 were fully immersed into 10 ml of an electrolyte and then allowed to stand for 24 hours. The electrolyte was used by dissolving 1.5 M $LiPF_6$ in a mixed solvent of ethylene carbonate, ethylmethyl carbonate, and dimethyl carbonate (20:10:70 by volume ratio).

From the negative electrode, the degree of separation of the negative active material layer (first and second active material layer) was identified visually. The results are shown in Table 2 as O (occurrence of separation) and X (no occurrence of separation).

**Experimental Example 4) Evaluation of ion resistance**

The ionic resistance of the negative electrodes according to Examples 1 and 2, and Comparative Examples 1 to 14 were measured. The results are shown in Table 2 as Rion.

The measurement of ion resistance was carried out by fabricating a symmetric cell including two negative electrode, setting amplitude Va value to 5 mV, measuring SC-EIS (square current electrochemical impedance spectroscopy), and separating only ion transfer resistance (Rion) of the internal resistance of the negative electrode from the measured results using a transmission line model theory to measure ion resistance.

**Experimental Example 5) Evaluation of adherence**

The adherence of the negative electrodes according to Examples 1 and 2, and Comparative Examples 1 to 14 were measured by the following procedures.

A tape adhered to a slide glass was attached to the prepared second active material layer and the tape and the second active material layer were peeled off to measure an adhesion strength using a 180° UTM tensile strength tester. The peeling speed was set to 10 mm/min, and the measurements were taken three times to obtain the average value of the force required to peel off 40 mm after starting to peel off. The results are shown in Table 2.

The configurations and the magnetic field strength used in preparations according to Examples 1 and 2, and Comparative Examples 1 to 14 were summarized and shown in Table 1.

Table 1

| | First active material layer | | Second active material layer | | Magnetic field strength (Gauss) |
|---|---|---|---|---|---|
| | Artificial graphite D50 ($\mu$m) | Amount of styrene-butadiene rubber (wt%) | Artificial graphite D50 ($\mu$m) | Amount of styrene-butadiene rubber (wt%) | |
| Example 1 | 6 | 3.6 | 15 | 0.4 | 6000 |
| Example 2 | 6 | 3.6 | 15 | 0.4 | 6000 |
| Comparative Example 1 | 6 | 3.6 | 15 | 0.4 | 2000 |
| Comparative Example 2 | 6 | 3.5 | 15 | 0.4 | 2000 |
| Comparative Example 3 | 15 | 0.4 | 15 | 3.6 | 2000 |
| Comparative Example 4 | 15 | 0.4 | 15 | 3.6 | 4000 |
| Comparative Example 5 | 15 | 3.6 | 15 | 0.4 | 2000 |
| Comparative Example 6 | 15 | 3.6 | 15 | 0.4 | 6000 |
| Comparative Example 7 | 15 | 3.5 | 15 | 0.4 | 2000 |
| Comparative Example 8 | 15 | 3.5 | 15 | 0.4 | 6000 |
| Comparative Example 9 | 15 | 3.6 | 15 | 0.4 | - |
| Comparative Example 10 | 15 | 3.6 | 15 | 0.4 | 2000 |
| Comparative Example 11 | 6 | 2 | 15 | 2 | 2000 |

(continued)

| | First active material layer | | Second active material layer | | Magnetic field strength (Gauss) |
|---|---|---|---|---|---|
| | Artificial graphite D50 ($\mu$m) | Amount of styrene-butadiene rubber (wt%) | Artificial graphite D50 ($\mu$m) | Amount of styrene-butadiene rubber (wt%) | |
| Comparative Example 12 | 6 | 0.4 | 6 | 3.6 | 2000 |
| Comparative Example 13 | 6 | 0.4 | 6 | 3.6 | 2000 |
| Comparative Example 14 | 6 | 3.6 | 15 | 0.4 | 2000 |

Table 2

| | Amount of Si (wt%) | DD of negative active material layer | Effect of reducing expansion ($\mu$m) | Separation | Rion ($\Omega$cm$^2$) | Adhesion (gf/mm) |
|---|---|---|---|---|---|---|
| Example 1 | 3 | 40 | -7.3 | X | 14 | 4.2 |
| Example 2 | 5 | 42 | -7.2 | X | 15 | 4.1 |
| Comparative Example 1 | 3 | 23 | -2.4 | X | 15 | 4.0 |
| Comparative Example 2 | 5 | 24 | -2.1 | X | 14 | 4.2 |
| Comparative Example 3 | 1.5 | 24 | -2.2 | X | 20 | 2.1 |
| Comparative Example 4 | 1.5 | 38 | -7.3 | X | 21 | 2.2 |
| Comparative Example 5 | 3 | 25 | -2.1 | X | 22 | 2.3 |
| Comparative Example 6 | 3 | 42 | -7.4 | ○ | 21 | 2.2 |
| Comparative Example 7 | 5 | 25 | -2.2 | ○ | 20 | 2.3 |
| Comparative Example 8 | 5 | 41 | -7.4 | ○ | 21 | 2.1 |
| Comparative Example 9 | 10 | 19 | 0 | X | 23 | 4.3 |
| Comparative Example 10 | 10 | 25 | -2.2 | X | 21 | 4.0 |
| Comparative Example 11 | 6 | 24 | -2.3 | ○ | 23 | 3.0 |
| Comparative Example 12 | 2.9 | 25 | -2.4 | X | 22 | 3.5 |
| Comparative Example 13 | 5 | 24 | -2.3 | X | 22 | 3.5 |
| Comparative Example 14 | 6 | 24 | -2.4 | ○ | 29 | 0.8 |

As shown in Table 2, the cells according to Examples 1 and 2 exhibited reduced expansion ratio, excellent adhesion, and low ionic resistance.

Comparative Examples 1 and 2 in which the configurations of the first active material layer and second active material layer, and the amount of Si were suitable, but the DD value was less than 30, exhibited excellent adherence, and low ionic resistance, but the effect of reducing expansion was not significant.

Comparative Example 3 in which artificial graphite having an average particle diameter of 15 $\mu$m were identically used in the first active material layer and the second active material layer, amount of Si was low, and the DD values were less than 30, exhibited no separation, but poor effect of reducing expansion, high ionic resistance, and low adhesion.

Comparative Example 4 in which the DD values was 30 or more, but the artificial graphite having an average particle diameter of 15 $\mu$m were identically used in the first active material layer and the second active material layer and the amount of Si was low, exhibited no separation and excellent effect of reducing expansion, but high ionic resistance and low adhesion.

Comparative Example 5 in which the amount of Si was 3 wt%, but artificial graphite having an average particle diameter of 15 $\mu$m were identically used in the first active material layer and the second active material layer and the DD values was less than 30, exhibited no separation, but poor effect of reducing expansion, high ionic resistance and low adhesion.

Comparative Example 6 in which the amount of Si was 3 wt% and the DD value was 30 or more, but artificial graphite having an average particle diameter of 15 μm were identically used in the first active material layer and the second active material layer, exhibited excellent effect of reducing expansion but occurrence of separation, high ionic resistance, and low adherence.

Comparative Examples 7 and 8 in which an amount of Si was 5 wt%, but the first active material layer and the second active material layer identically used the artificial graphite having an average particle diameter of 15 μm, exhibited improved effects for reducing expansion due to the control of the DD value, but the occurrence of the separation, high ionic resistance, and low adhesion which were similarly observed with another comparative examples.

As utilized herein, the terms "substantially," "about," or similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While the subject matter of the present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the spirit and scope of the appended claims and equivalents thereof. Therefore, the aforementioned embodiments should be understood to be mere examples but not limiting the present disclosure in any way.

**Claims**

1. A negative electrode (20) for a rechargeable lithium battery (100), comprising:

 a current collector; and
 a negative active material layer,
 wherein the negative active material layer comprises:

 a first active material layer on the current collector and comprising a first crystalline carbon, a Si-C composite, and a first binder; and
 a second active material layer on the first active material layer and comprising a second crystalline carbon, a Si-C composite, and a second binder,
 a particle diameter of the first crystalline carbon is smaller than a particle diameter of the second crystalline carbon, and based on the total negative active material layer, an amount of the first binder is larger than an amount of the second binder,
 an amount of Si is 3 wt% or more based on 100 wt% of the negative active material layer, and
 a DD (Degree of Divergence) value defined by Equation 1 is 30 or more.

$$[\text{Equation 1}]$$

$$DD \text{ (Degree of Divergence)} = (I_a/I_{total}) * 100$$

 wherein,
 $I_a$ is a sum of peak intensities at non-planar angles measured by X-ray powder diffraction (XRD) using a CuKα ray, and, $I_{total}$ is a sum of peak intensities at all angles measured by XRD using a CuKα ray.

2. The negative electrode (20) for a rechargeable lithium battery (100) as claimed in claim 1, wherein the DD is 30 to 60.

3. The negative electrode (20) for a rechargeable lithium battery (100) as claimed in claim 1 or 2, wherein the first crystalline carbon has a particle diameter of 6 μm to 10 μm; and/or wherein the second crystalline carbon has a particle diameter of 10 μm to 20 μm.

4. The negative electrode (20) for a rechargeable lithium battery (100) as claimed in any one of claims 1 to 3, wherein a ratio of a particle diameter of the first crystalline carbon and a particle diameter of the second crystalline carbon is 1:2 to 1:3.

5. The negative electrode (20) for a rechargeable lithium battery (100) as claimed in any one of claims 1 to 4, wherein a ratio of an amount of the first binder and an amount of the second binder is a weight ratio of 60:40 to 90:10.

6. The negative electrode (20) for a rechargeable lithium battery (100) as claimed in any one of claims 1 to 5, wherein an amount of the first binder is 1.5 wt% to 5 wt% based on 100 wt% of the negative active material layer; and/or wherein an amount of the second binder is 0.3 wt% to 1 wt% based on the negative active material layer.

7. The negative electrode (20) for a rechargeable lithium battery (100) as claimed in any one of claims 1 to 6, wherein an amount of the Si is 3 wt% or more based on 100 wt% of the negative active material layer, preferably wherein an amount of the Si is 3 wt% to 10 wt% based on 100 wt% of the negative active material layer.

8. The negative electrode (20) for a rechargeable lithium battery (100) as claimed in any one of claims 1 to 7, wherein the Si-C composite comprises Si and amorphous carbon.

9. The negative electrode (20) for a rechargeable lithium battery (100) as claimed in any one of claims 1 to 8, wherein the Si-C composite comprises Si, amorphous carbon, and crystalline carbon.

10. The negative electrode (20) for a rechargeable lithium battery (100) as claimed in any one of claims 1 to 9, wherein the first active material layer has a thickness of 20 μm to 150 μm.

11. The negative electrode (20) for a rechargeable lithium battery (100) as claimed in any one of claims 1 to 10, wherein the second active material layer has a thickness of 130 μm to 250 μm.

12. The negative electrode (20) for a rechargeable lithium battery (100) as claimed in any one of claims 1 to 11, wherein the $I_a$ is a sum of peak intensities at 2θ=42.4±0.2°, 43.4±0.2°, 44.6±0.2°, and 77.5±0.2° measured by XRD using a CuKα ray, and,
the $I_{total}$ is a sum of peak intensities at 2θ=26.5±0.2°, 42.4±0.2°, 43.4±0.2°, 44.6±0.2°, 54.7±0.2°, and 77.5±0.2° measured by XRD using a CuKα ray.

13. The negative electrode (20) for a rechargeable lithium battery (100) as claimed in any one of claims 1 to 12, wherein the peak intensity is a peak integral area value.

14. The negative electrode (20) for a rechargeable lithium battery (100) as claimed in any one of claims 1 to 13, wherein the negative electrode (20) has an active mass density of 1.0 g/cc to 2.0 g/cc.

15. A rechargeable lithium battery (100), comprising:

   a negative electrode (20) as claimed in any one of claim 1 to claim 14;
   a positive electrode (10); and
   a non-aqueous electrolyte.

# FIG. 1

# FIG. 2

# FIG. 3

EP 4 601 026 A2

Charge

Active mass

Tensile
stress

Substrate

Compressive
stress

stress

Discharge

Compressive
stress

Substrate

Tensile
stress

stress

# FIG. 4

# FIG. 5

EP 4 601 026 A2

# FIG. 6

# FIG. 7